# FASCICULE DE BREVET EUROPEEN

(11) **EP 2 974 966 B1**
(45) Date de publication et mention de la délivrance du brevet: **13.02.2019**
(21) Numéro de dépôt: 15174130.3
(22) Date de dépôt: 26.06.2015
(51) Int. Cl.: B64G 1/40, F02K 9/50

(54) **DISPOSITIF DE PROPULSION POUR SATELLITE PERMETTANT L'ELIMINATION PASSIVE DE GAZ PROPULSEUR**
ANTRIEBSVORRICHTUNG FÜR SATELLIT, DIE EINE PASSIVE ABSCHEIDUNG VON ANTRIEBSGAS ERMÖGLICHT
PROPULSION DEVICE FOR SATELLITE ALLOWING THE PASSIVE REMOVAL OF PROPELLANT GAS

(30) Priorité: 16.07.2014 FR 1401586
(43) Date de publication de la demande: 20.01.2016
(73) Titulaire: THALES, 92400 Courbevoie (FR)
(72) Inventeur: FONTAINE, Laurent, 06156 Cannes la Bocca Cedex (FR)
(74) Mandataire: Brunelli, Gérald

(56) Documents cités:
- WO-A1-96/26108
- US-A- 3 732 693
- US-A- 5 158 362
- US-A1- 2013 239 544

## Description

L'invention se situe dans le domaine des satellites et concerne plus particulièrement un dispositif de propulsion pour satellite.

L'invention trouve une application particulière dans le domaine des satellites géostationnaires.

Pour envoyer un satellite sur son orbite opérationnelle puis pour assurer son maintien à poste pendant la durée de fonctionnement du satellite, des moyens de propulsion doivent être prévus. En règle générale, on utilise un dispositif comprenant au moins un réservoir comprenant de l'ergol que l'on pressurise.

On entend par « ergol » une substance employée seule ou en association avec d'autres substances et destinée à fournir de l'énergie.

On distingue plusieurs types de dispositif de propulsion à ergol :
- Un dispositif bi-ergol comprenant deux réservoirs comprenant les ergols. Il comprend en outre un réservoir de gaz propulseur comprenant, par exemple, de l'hélium à haute pression, le gaz propulseur permettant de pressuriser les ergols.
- Un dispositif mono-ergol comprenant un réservoir divisé en deux compartiments par une membrane : un compartiment comprenant l'ergol, généralement de l'hydrazine, et, un compartiment comprenant un gaz qui appuie sur la membrane de manière à pressuriser l'ergol.
- Il existe aussi des dispositifs mono-ergols sans membrane dont la structure est similaire à celle des dispositifs bi-ergols.

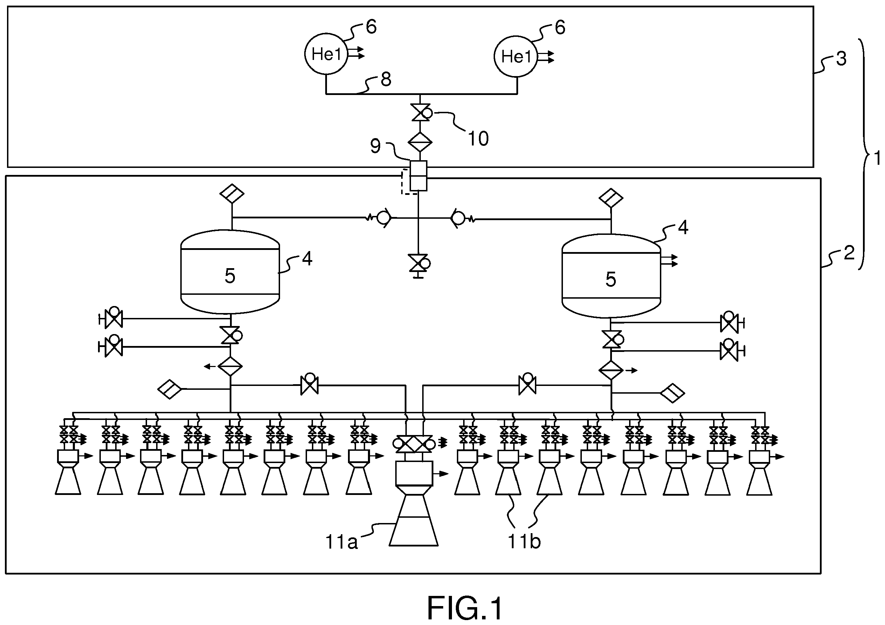

La figure 1 représente un schéma fonctionnel d'un dispositif de propulsion bi-ergol, selon l'art connu.

Le dispositif de propulsion bi-ergol 1 comprend une première partie 2 à basse pression et une deuxième partie 3 à haute pression.

La première partie 2 basse pression comprend notamment deux réservoirs 4 d'ergols. En l'espèce, les ergols 5 utilisés comprennent du MMH acronyme de monométhylhydrazine et du MON, acronyme de Mixed Oxides Nitrogen.

La deuxième partie 3 à haute pression comprend au moins un réservoir, en l'espèce, elle comprend deux réservoirs 6 contenant un gaz de propulsion 7, en l'occurrence l'hélium, le gaz de propulsion 7 étant à haute pression, 300 bars environ, avant la mise sur orbite du satellite.

L'hélium 7 sous pression est injecté via des conduits 8 et un régulateur de pression 9 à l'intérieur des réservoirs 4 d'ergols de manière à pressuriser les ergols 5, la pression régulée dans les conduits 8 en aval du régulateur de pression 9 étant de l'ordre de 20 bars.

En d'autres termes, tous les conduits 8 situés dans la deuxième partie 3 en amont du régulateur de pression 9 comprennent du gaz de propulsion 7 à haute pression et les conduits 8 situés dans une partie 2 en aval du régulateur de pression 9 comprennent du gaz de propulsion 7 à basse pression.

Dans la deuxième partie 3, la pression avant le lancement du satellite est comprise entre 200 et 300 bars. Après la mise sur son orbite opérationnelle, la pression dans la deuxième partie 3 est comprise entre 30 et 50 bars. En aval du régulateur de pression 9, la pression est d'environ 20 bars.

Une vanne PV1-NC 10 de type « fermé » en mode nominal est disposée entre les réservoirs 6 de gaz de propulsion et le régulateur de pression 9. Cette vanne PV1-NC 10 permet l'apport du gaz de propulsion 7 au niveau du régulateur de pression 9 lors du fonctionnement des tuyères 11a, 11b notamment au moment de la mise sur orbite et du maintien à poste du satellite.

Le principe de fonctionnement du dispositif selon l'art connu se résume comme suit.

Au cours du remplissage des réservoirs 4 de réactifs de propulsion et des réservoirs 6 de gaz de propulsion, la vanne PV1-NC 10 est en position « fermée ».

Lors du lancement du satellite, la vanne PV1-NC 10 est ouverte, le gaz de propulsion 7 est introduit sous une pression d'environ 20 bars à l'intérieur des réservoirs 4 d'ergols. Les ergols 5 pressurisés sont ensuite injectés dans les tuyères 11a, 11b.

La quantité de gaz de propulsion 7 et de réactifs de propulsion 5 doit être suffisante pour assurer le lancement du satellite sur son orbite opérationnelle, le maintien du satellite sur son orbite opérationnelle et la mise à poste du satellite sur son orbite finale lorsque celui-ci est en fin de service.

Aujourd'hui, les satellites en fin de service comprennent des sources d'énergie résiduelles, telles que des gaz de propulsion ou des ergols.

Conformément à une nouvelle règlementation LOS acronyme de « Low Orbital spatial », en langue anglaise, entrant en vigueur en 2020, toutes les sources d'énergie présentes à l'intérieur d'un satellite doivent être éliminées lorsque celui-ci est en fin de service.

Une première solution envisagée pour se conformer à la règlementation LOS consiste à isoler la deuxième partie 3, notamment, à l'aide d'au moins une vanne PV7-NO 12 de type « ouvert » en mode nominal disposée de manière à isoler la première partie 2 de la deuxième partie 3 lorsque le satellite est sur son orbite opérationnelle, et, à ajouter une vanne pyrotechnique de type « fermé » commandable disposée au niveau de la deuxième partie 3.

Lorsqu'il est décidé de mettre fin au fonctionnement du satellite, la vanne pyrotechnique de type « fermée » disposée au niveau de la deuxième partie 3 est actionnée de manière à évacuer la totalité des gaz de propulsion restant, les ergols 5 résiduels pouvant être évacués via les tuyères 11a ; 11b.

Cette solution présente toutefois certains inconvénients, notamment :
- l'ajout de masse supplémentaire d'environ 300g correspondant notamment à la vanne pyrotechnique et de ses supports. Or, toute masse en excès à bord d'un satellite représente un surcoût non négligeable.
- la nécessité de test pour s'assurer du bon fonctionnement de la vanne pyrotechnique requérant des temps de main d'oeuvre supplémentaires.

Le document US 3 732 693 divulgue une ouverture qui permet l'évacuation des gaz de propulsion via une vanne lorsque la pression dans le réservoir est trop importante.

La présente invention consiste à proposer un système alternatif de propulsion permettant notamment l'élimination des gaz de propulsion du système de propulsion de manière passive.

L'invention s'applique particulièrement à un dispositif de propulsion de type bi-ergol ou mono-ergol sans membrane.

Selon un aspect de l'invention, il est proposé un système de propulsion pour satellite comprenant :
- au moins un réservoir comprenant un réactif de propulsion, et
- au moins réservoir comprenant un gaz de propulsion pressurisant le réactif de propulsion,
- au moins un moyen de transport du gaz de propulsion du réservoir de gaz de propulsion vers le réservoir de réactif de propulsion, le moyen de transport comprenant au moins une ouverture permettant une fuite continue du gaz de propulsion, et
- au moins un dispositif destiné à isoler, après la mise sur orbite opérationnelle du satellite, une zone comprenant l'ouverture du reste du système de propulsion.

L'invention permet notamment l'évacuation des gaz de propulsion de manière passive sans l'intervention d'un opérateur.

Dans un mode de réalisation le moyen de transport du gaz de propulsion comprend en outre un régulateur de pression, l'ouverture étant située en aval du régulateur de pression.

Alternativement, l'ouverture est située en amont du régulateur de pression.

Avantageusement, le diamètre de l'ouverture est compris entre 1 et 20 microns et préférentiellement égal à 11 microns.

Cet ordre de grandeur du diamètre de l'ouverture permet une élimination du gaz propulseur lente et continue durant toute la durée de fonctionnement opérationnel du satellite, et éventuellement pendant quelques années après la mise au rebut du satellite sans gêner le lancement, la mise à poste, le maintien sur son orbite opérationnelle et la mise à poste sur son orbite finale ou cimetière du satellite lors de sa fin de vie.

Dans un mode de réalisation, l'ouverture est connectée avec l'extérieur du système de propulsion.

Dans un autre mode de réalisation, l'ouverture est connectée avec les réservoirs de réactifs de propulsion.

L'invention sera mieux comprise à la lecture de la description donnée à titre d'exemples. La description se réfère aux dessins qui l'accompagnent dans lesquels :
- la figure 1, déjà décrite, représente de manière schématique un dispositif de propulsion de type bi-ergol, selon l'art connu,
- la figure 2 représente de manière schématique un mode de réalisation du système de propulsion de type bi-ergol, selon un aspect de l'invention, et
- la figure 3 représente l'évolution de la pression d'hélium dans un conduit situé en amont du régulateur de pression, selon un aspect de l'invention.

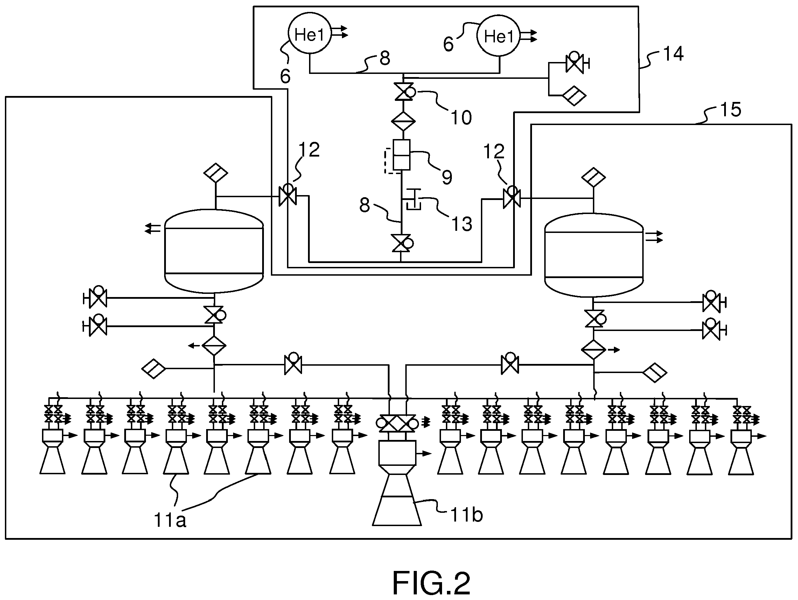

La figure 2 représente un mode de réalisation d'un système de propulsion selon l'invention.

Le système de propulsion comprend :
- deux réservoirs 6 de gaz de propulsion, un régulateur de pression 9, et une vanne PV1-NC 10 disposée entre le régulateur de pression 9 et les réservoirs 6 de gaz de propulsion,
- deux réservoirs 4 d'ergols et les tuyères 11a, 11b,
- des moyens de transport du gaz de propulsion tel que des conduits 8, les conduits présentant au moins une ouverture 13 permettant une fuite de gaz continue, et
- un dispositif 12 pour isoler une zone 14 comprenant l'ouverture 13, le dispositif pouvant être au moins une vanne PV7-NO 12. En l'espèce, la zone 14 comprend notamment les réservoirs 6 de gaz, le régulateurs de pression 9.

En pratique, l'ouverture 13 selon l'invention peut prendre l'aspect d'une dérivation en forme de T d'un des conduits 8 dans lequel circule le gaz de propulsion 7, une des embouchures de la dérivation étant surmontée d'un bouchon présentant une ouverture 13 calibrée de manière à permettre une fuite lente et continue du gaz de propulsion.

En résumé, l'invention consiste à réaliser une ouverture 13 de manière à évacuer le gaz de propulsion 7 tout au long de la durée de fonctionnement du satellite de manière à ce que la pression résiduelle P_{Res} de gaz de propulsion en fin d'utilisation du satellite soit inférieure à une valeur seuil P_{S} conforme à la règlementation LOS sans pour autant gêner ou empêcher le lancement et le maintien du satellite sur son orbite, la valeur seuil P_{S} étant de l'ordre de 2 bars, et préférentiellement de 0,20 bar.

Dans un autre mode de réalisation, la zone 14 comprend uniquement l'ouverture 13, l'ouverture 13 étant connectée avec l'extérieur du système de propulsion 1.

Dans un autre mode de réalisation, la zone 14 comprend en outre les réservoirs 4 d'ergols et l'ouverture 13 est connectée aux réservoirs 4 permettant de pressuriser les ergols 5 et de maintenir les performances des tuyères 11a ; 11b. La zone 14 comprenant l'ouverture 13 et les réservoirs 4 d'ergols est donc bien isolée du reste du système de propulsion 1

L'ouverture 13 se situe en amont du régulateur de pression 9 ou en aval du régulateur de pression 9. Lorsque l'ouverture 13 se situe en amont du régulateur de pression, l'ouverture 13 doit être suffisamment résistante de manière à éviter une déchirure des parois de l'ouverture sous l'effet de la pression d'environ 200 à 300 bars et notamment lors du début de mise en service du satellite. Par contre, lorsque l'ouverture 13 se situe en aval du régulateur de pression 9, la pression exercée sur les parois de l'ouverture 13 est moins importante, elle est limitée à environ 20 bars.

L'ouverture 13 présente une section quelconque. Avantageusement, la section de l'ouverture 13 est circulaire.

Lorsque l'ouverture 13 est située en aval du régulateur de pression 9, le diamètre de l'ouverture 13 est compris entre 1 et 20 microns, et préférentiellement de 11 microns. La valeur du diamètre de l'ouverture 13 résulte d'un compromis entre la vitesse de fuite du gaz de propulsion 7 de manière à ce que la pression résiduelle P_{Res} de gaz de propulsion soit inférieure à la valeur seuil P_{S} en fin de fonctionnement du satellite et la nécessité de maintenir une pression minimale à l'intérieur de la deuxième zone 2 de manière à permettre au dispositif de propulsion 1 de jouer son rôle de maintien à poste du satellite jusqu'à sa mise au rebut. En d'autres termes, la fuite de gaz de propulsion 7 doit être suffisamment grande pour que la quantité de gaz résiduelle en fin de service du satellite soit conforme à la règlementation LOS. Mais la fuite ne doit toutefois pas être trop importante de manière à ne pas gêner l'envoi du satellite sur son orbite opérationnelle et à permettre le maintien à poste du satellite, c'est-à-dire à permettre le fonctionnement des tuyères 11a, 11b tout long du fonctionnement opérationnel du satellite.

Lorsque l'ouverture 13 est disposée en aval du régulateur de pression 9, une ouverture 13 circulaire ayant un diamètre de 11 microns provoque une diminution de la pression estimée à environ 5 à 30 bars dans les réservoirs 6 de gaz de propulsion durant les quinze premiers jours correspondant à la mise sur orbite. Cette perte de pression est considérée comme une diminution acceptable en termes d'impact vis-à-vis de l'envoi et de la mise à poste du satellite. En fin de service du satellite, c'est-à-dire environ 15 ans après sa mise sur orbite, la pression résiduelle estimée du gaz de propulsion 7 est inférieure à 0,2 bar.

Le principe de fonctionnement du système de propulsion selon l'invention décrit ci-dessus peut se résumer comme suit.

Avant le lancement du satellite, les réservoirs 6 de gaz de propulsion sont remplis de gaz de propulsion, la pression du gaz de propulsion 7 est d'environ 300 bars. La vanne PV1-NC 10 est en position fermée, le gaz 7 n'est pas injecté dans les réservoirs 4 de réactifs de propulsion.

Lors du lancement du satellite, la vanne PV1-NC 10 est ouverte, le gaz est injecté dans le réservoir 4 d'ergol.

Après la mise à poste du satellite, la pression à l'intérieur des réservoirs 6 de gaz de propulsion est comprise entre 30 et 50 bars. La vanne PV7-NO 12 est fermée permettant d'isoler la zone 14 comprenant l'ouverture 13. La vanne PV1-NC 10 restée en position ouverte permet au gaz de propulsion 7 de s'échapper via l'ouverture 13.

Dans un mode de réalisation de l'invention, le gaz de propulsion 7 peut être évacué vers l'extérieur du système de propulsion 1, ou, réinjecté vers les réservoirs 4 d'ergols de manière à pressuriser les ergols 5 pour une utilisation des tuyères 11a, 11b ultérieure.

Dans un autre mode de fonctionnement, l'ouverture 13 peut être composée de deux voire d'une pluralité d'ouvertures 13 disposée en opposition afin d'éviter de créer des poussées perturbant les trajectoires du satellite.

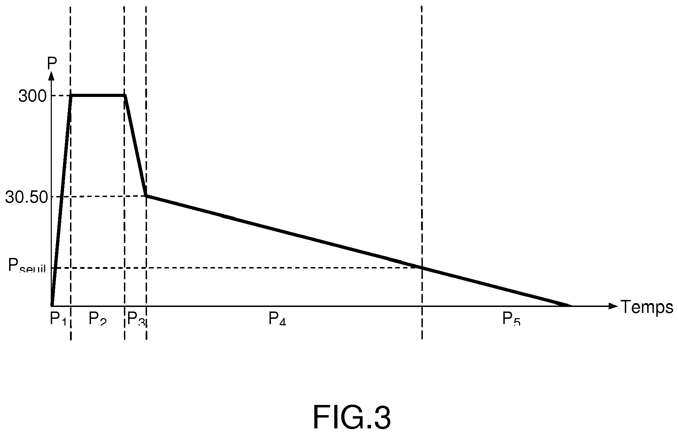

La figure 3 représente une évolution de la pression à l'intérieur d'un conduit en amont du régulateur de pression au cours du service opérationnel du dispositif de propulsion selon l'invention.

En l'occurrence, l'ouverture 13 est disposée en aval du régulateur de pression 9.

Une première période P1 correspond à la période de remplissage du réservoir 4 de gaz propulseur, la vanne PV1-NC 10 étant en position « fermée ». Au cours de cette période, la pression augmente rapidement pour atteindre une pression de 300 bars environ.

Une deuxième période P2 correspond à une période de latence entre la fin du remplissage du réservoir 4 de gaz propulseur et le début de la mise sur son orbite opérationnelle du satellite. La vanne PV1-NC 10 étant toujours en position « fermée », aucune diminution de pression n'est observée.

Une troisième période P3 de 15 jours environ correspond à la mise à poste du satellite. Au cours de cette étape la vanne PV1-NC 10 est activée en position « ouverte » et la vanne PV7-NO 12 est inactive en position « ouverte ».

Cette étape de mise en orbite nécessite une grande quantité d'ergols 5 pressurisés, requérant une grande quantité d'hélium. La pression d'hélium dans la zone de haute pression 13 diminue fortement pour atteindre une valeur comprise entre 30 et 50 bars. Au cours de cette troisième période, la fuite de gaz de propulsion 7 via l'ouverture 13 est effective.

Toutefois la diminution de pression d'hélium liée à la mise à poste est telle que la diminution de pression d'hélium via l'ouverture 13 apparaît comme négligeable.

Une quatrième période P4 correspond à la durée de fonctionnement opérationnel du satellite, cette période durant généralement entre 15 et 20 ans. Pendant cette quatrième période P4, la pression du gaz de propulsion 7 diminue avec une pente plus faible que la diminution observée lors de la mise à poste pour atteindre une valeur minimale, la diminution correspondant à la fuite de gaz propulseur 7 selon l'invention.

La cinquième période P5 correspond à la fin de service du satellite, une partie de la pression minimale servant notamment à la mise sur l'orbite finale du satellite, la pression résiduelle après la mise sur orbite finale du satellite en fin de service est inférieure à une pression seuil P_{S} définie par la règlementation LOS. Le gaz de propulsion restant continue de s'échapper de manière lente et continue via l'ouverture 13.

## Revendications

1. Système de propulsion pour satellite comprenant :
- au moins un réservoir (4) comprenant un réactif de propulsion, et
- au moins réservoir (6) comprenant un gaz de propulsion (7) pressurisant le réactif de propulsion (5),
- au moins un moyen de transport (8) du gaz de propulsion du réservoir de gaz de propulsion vers le réservoir (4) de réactif de propulsion, **caractérisé en ce que** le moyen de transport (8) comprend au moins une ouverture (13) permettant une fuite continue du gaz de propulsion (7), et
- au moins un dispositif (12) destiné à isoler, après la mise sur orbite opérationnelle du satellite, une zone (14) comprenant l'ouverture (13) du reste du système de propulsion (1).

2. Système selon la revendication 1 dans lequel le moyen de transport (8) du gaz de propulsion comprend en outre un régulateur de pression (9), l'ouverture (13) étant située en aval du régulateur de pression (9).

3. Système selon la revendication 1 dans lequel le moyen de transport (8) du gaz de propulsion comprend en outre un régulateur de pression (9), l'ouverture (13) étant située en amont du régulateur de pression (9).

4. Système selon l'une des revendications précédentes dans lequel le diamètre de l'ouverture (13) est compris entre 1 et 20 microns.

5. Système selon la revendication 4 dans lequel le diamètre de l'ouverture (13) est égal 11 microns.

6. Système selon l'une des revendications précédentes dans lequel l'ouverture (13) est connectée avec l'extérieur du système de propulsion.

7. Système selon l'une des revendications précédentes dans lequel l'ouverture (13) est connectée avec le réservoir (4) de réactif de propulsion.

## Patentansprüche

1. Antriebsvorrichtung für Satelliten, Folgendes beinhaltend:
- mindestens einen Tank (4), welcher ein Antriebsreagenz beinhaltet, und
- mindestens einen Tank (6), welcher ein Antriebsgas (7) beinhaltet, welches das Antriebsreagenz (5) mit Druck beaufschlagt,
- mindestens ein Transportmittel (8) des Antriebsgases vom Antriebsgastank zum Tank (4) des Antriebsreagenzes, **dadurch gekennzeichnet, dass** das Transportmittel (8) mindestens eine Öffnung (13) beinhaltet, welche ein kontinuierliches Lecken des Antriebsgases (7) ermöglicht, und
- mindestens eine Vorrichtung (12), welche dazu bestimmt ist, nachdem der Satellit auf Betriebsumlaufbahn gebracht wurde, einen Bereich (14), welcher die Öffnung (13) beinhaltet, vom Rest des Antriebssystems (1) zu isolieren.

2. System nach Anspruch 1, bei welchem das Transportmittel (8) des Antriebsgases zudem einen Druckregler (9) beinhaltet, wobei die Öffnung (13) sich im nachgelagerten Bereich des Druckreglers (9) befindet.

3. System nach Anspruch 1, bei welchem das Transportmittel (8) des Antriebsgases zudem einen Druckregler (9) beinhaltet, wobei die Öffnung (13) sich im vorgelagerten Bereich des Druckreglers (9) befindet.

4. System nach einem der vorhergehenden Ansprüche, bei welchem der Durchmesser der Öffnung (13) zwischen 1 und 20 Mikrometer beträgt.

5. System nach Anspruch 4, bei welchem der Durchmesser der Öffnung (13) 11 Mikrometer beträgt.

6. System nach einem der vorhergehenden Ansprüche, bei welchem die Öffnung (13) mit dem Äußeren des Antriebssystems verbunden ist.

7. System nach einem der vorhergehenden Ansprüche, bei welchem die Öffnung (13) mit dem Tank (4) des Antriebsreagenzes verbunden ist.

## Claims

1. A satellite propulsion system for a satellite comprising :
- at least one tank (4) containing a propulsion reagent, and
- at least one tank (6) containing a propulsion gas (7) that pressurizes the propulsion reagent (5),
- at least one transport means (8) for transporting the propulsion gas from the propulsion gas tank to the propulsion reagent tank (4), **characterized in that** the transport means (8) comprises at least one opening (13) that allows for the propulsion gas (7) to leak off continuously, and
- at least one device (12) that is adapted to, after the satellite has entered operational orbit, isolate a zone (14) comprising the opening (13) from the rest of the propulsion system (1).

2. A system according to claim 1, in which the transport means (8) of the propulsion gas further comprises a pressure regulator (9), the opening (13) being situated downstream of the pressure regulator (9).

3. A system according to claim 1, in which the transport means (8) of the propulsion gas further comprises a pressure regulator (9), the opening (13) being situated upstream of the pressure regulator (9).

4. A system according to any one of the preceding claims, in which the diameter of the opening (13) is comprised between 1 and 20 microns.

5. A system according to claim 4, in which the diameter of the opening (13) is equal to 11 microns.

6. A system according to any one of the preceding claims, in which the opening (13) is connected to outside of the propulsion system.

7. A system according to any one of the preceding claims, in which the opening (13) is connected to the propulsion reagent tank (4).
